# EUROPÄISCHE PATENTSCHRIFT

(11) **EP 1 631 726 B1**
(45) Veröffentlichungstag und Bekanntmachung des Hinweises auf die Patenterteilung: **11.04.2012**
(21) Anmeldenummer: 04735185.3
(22) Anmeldetag: 28.05.2004
(51) Int. Cl.: E03F 7/10, C02F 1/38

(54) **WASSERAUFBEREITUNGSEINRICHTUNG, INSBESONDERE FÜR KANALREINIGUNGSFAHRZEUG**
WATER PREPARATION DEVICE, IN PARTICULAR FOR A DRAIN CLEANING VEHICLE
DISPOSITIF DE TRAITEMENT DES EAUX USEES EN PARTICULIER POUR UN VEHICULE D'EPURATION DES CANALISATIONS SOUTERRAINES

(30) Priorität: 12.06.2003 CH 102403
(43) Veröffentlichungstag der Anmeldung: 08.03.2006
(73) Patentinhaber: Dietmar Kaiser AG, 9486 Schaanwald (LI)
(72) Erfinder: KAISER, Dietmar, FL-9486 Schaanwald (LI)
(74) Vertreter: Hasler, Erich
(86) Internationale Anmeldenummer: PCT/CH2004/000323
(87) Internationale Veröffentlichungsnummer: WO 2004/111355

(56) Entgegenhaltungen:
- CH-A- 630 684
- DE-A- 3 904 452
- DE-A- 10 247 635
- DE-A- 19 602 334
- DE-U- 8 911 344
- US-A- 6 013 138

## Beschreibung

Die Erfindung betrifft eine Wasseraufbereitungseinrichtung, insbesondere zum Einsatz in Verbindung mit einem Kanalreinigungsfahrzeug, gemäss dem Oberbegriff des Patentanspruchs 1.

Kommunalfahrzeuge, insbesondere Kanalreinigungsfahrzeuge, werden vor allem zur Reinigung von Abwasserkanälen und dergleichen eingesetzt. Sie werden auch zur Beseitigung von Kanalverstopfungen, zur Strassenreinigung nach grossen Niederschlägen mit Vermurungen, Überschwemmungen, zur Absaugung von Schmutz und Schlamm aus Behältern und Fässern usw. verwendet. Sie umfassen einen auf dem Fahrgestell eines Lastkraftwagen montierten Tank, der in mehrere Kammern unterteilt ist. Der meist zylindrisch ausgebildete, fassartige Tank ist üblicherweise liegend angeordnet. Bei einer aus dem Stand der Technik bekannten Variante derartiger Kanalreinigungsfahrzeuge besitzt der Tank vom rückwärtigen Ende des Fahrzeuges aus gesehen eine erste grössere Kammer, in der sich Steine, Kies und Schlamm aus dem über einen Saugschlauch aufgenommenen Schlamm-Wasser-Gemisch absetzen. An die Schlammkammer schliesst in Richtung der Fahrerkabine eine Abscheidekammer an, in der das mit der Saugluft mitgeführte Schlamm-Wasser-Gemisch von der Saugluft abgetrennt und das Wasser vom Schlamm getrennt wird. Zur Fahrerkabine hin schliesst eine Frischwasserkammer an, die zur Bevorratung von Frischwasser dient, das zur Reinigung der vorgereinigten Kanäle, Behälter oder Fässer mit einem Hochdruckwasserstrahl dient. Für die Erzeugung des dafür notwendigen Drucks ist eine gesonderte Hochdruckpumpe vorgesehen. Der für die Absaugung des Wasser-Schlamm-Gemisches erforderliche Unterdruck wird durch eine Vakuumpumpe, beispielsweise eine Wasserringpumpe, erzeugt, die bei dem bekannten Ausführungsbeispiel innerhalb der Frischwasserkammer angeordnet ist.

Die Frischwasserkammer und der Abscheider nehmen einen grossen Teil des Tankvolumens ein. Dieses Volumen fehlt in der Schlammkammer zur Aufnahme des abgesaugten Schlammes. Dadurch erreicht die Schlammkammer schneller den maximalen Füllstand und der Reinigungsvorgang muss unterbrochen werden, um sie zu entleeren. Ausserdem ist die Schlammkammer, welche im Betrieb ein relativ hohes Gewicht annehmen kann, am Fahrzeug sehr weit hinten angeordnet. In Verbindung mit dem am rückwärtigen Ende des Tanks angeordneten Ausleger für den Schlammabsaugschlauch und der am Tankende montierten Haspel für den Hochdruckschlauch resultiert daraus eine sehr ungünstige Gewichtsverteilung am Kanalreinigungsfahrzeug. Diese kann sich in einer übermässigen Abnutzung der Hinterräder des Fahrzeugs auswirken. Die ungünstige Schwerpunktlage kann sogar dazu führen, dass die Lenkbarkeit des Fahrzeugs beeinträchtigt wird.

Zur Abhilfe dieser Situation ist bei einem anderen bekannten Kanalreinigungsfahrzeug vorgeschlagen, die Wasseraufbereitungseinrichtung, welche den Abscheider und den Behälter für das Frischwasser umfasst, aus dem liegenden zylindrischen Tank zu verlagern. Bei dieser Anordnung ist zwischen der Fahrerkabine und dem Tank oberhalb des Fahrzeugrahmens ein Raum ausgespart, der den Frischwassertank, den Abscheider, beispielsweise einen Zyklon, und die Vakuumpumpe, meist eine Wasserringpumpe, aufnimmt. Dabei ist die Wasserringpumpe zwischen dem Abscheider und dem Frischwassertank angeordnet, die rechts und links am Fahrzeugrahmen montiert sind. Diese Anordnung erlaubt es, den Schlammtank länger auszubilden. Die Volumensvergrösserung sorgt für einen längeren ununterbrochenen Betrieb und verbessert auch die Gewichtsverteilung am Fahrzeug. Nachteilig an dieser Anordnung ist, dass durch die seitliche Anordnung des Abscheiders und des Frischwassertanks die Breite des Fahrzeugs relativ gross ist. Dies kann insbesondere in den beengteren Verhältnissen europäischer Kommunen zu Beeinträchtigungen im Einsatz des Kanalreinigungsfahrzeugs führen.

Das Schweizer Patent Nr. 630 084 offenbart ein Kanalreinigungrsfahrzeug mit einem Brauchwassertank, an welchem ein mit einer Kanaldüse bestückter Räumschlauch angeschlossen ist. Neben dem Brauchwassertank ist ein Abfuhrbehälter vorgesehen, an welchem eine in den zu reinigenden Kanal absenkbare Saugleistung angeschlossen ist. Abfuhrbehälter und Brauchwassertank sind mittels einer Umpumpleitung verbunden, welcher abfuhrbehälterseitig ein Filter vorgelagert ist. Um einen besonders hohen Reinigungsgrad des aus dem Abfuhrbehälters entnommenen Brauchwassers zu gewährleisten, ist eine weitere Reinigungseinrichtung mit einem Zyklon vorgesehen, dessen Eingang_mit einer saugseitig an den Brauchwassertank angeschlossenen Niederdruckpumpe verbunden ist, und dessen Ausgang für gereinigter Wasser zu der den Räumschlauch beaufschlagenden Hochdruckpumpe führt.

Die deutsche Offenlegungsschrift DE-OS-196 02 334 zeigt einen kombinierten Säug-Spülaufbau mit einer Wasseraufbereitungsanlage für ein Kanalreinigungsfahrzeug. Zwischen der Schmutzwasserpumpe und einer Brauchwasserkammer ist eine zusätzliche Reinigungseinrichtung in Gestalt eines Rückspülfilters vorgesehen. Der Rückspülfilter ist gemäss einem Ausführungsbeispiel in der Brauchwasserkammer angeordnet.

Die Offenlegungsschrift DE-OS-39 044 52 offenbart einen mobile Anordnung zum Aufbereiten von Wässern, wie Abwasser und Gülle, welche mehrere transportier- und stapelbare Kleincontainer umfasst, in welchen Trennvorrichtungen, z.B. Zyklone, angeordnet sind.

Aufgabe der vorliegenden Erfindung ist es, die Nachteile der Kanalreinigungsfahrzeuge des Stands der Technik zu vermeiden. Es soll eine Wasseraufbereitungseinrichtung geschaffen werden, welche platzsparend insbesondere auf einem Kanalreinigurigsfahrzeug montierbar ist. Die Wasseraufbereitungseinrichtung soll es erlauben, ein Kanalreinigungsfahrzeug mit einem Schlammtank mit ausreichend grossem Volumen auszustatten, und sie soll eine günstige Gewichtsverteilung und Schwerpunktanordnung ermöglichen. Dabei soll die Wasseraufbereitungseinrichtung möglichst kompakt ausgebildet sein, damit bei der Montage auf einem Kanalreinigungsfahrzeug die Fahrzeugbreite möglichst gering gehalten werden kann und auch bei engeren Strassenverhältnissen die volle Einsetzbarkeit des Fahrzeugs gewährleistet ist.

Zur Lösung dieser Aufgaben schlägt die Erfindung eine Wasseraufbereitungseinrichtung, insbesondere für ein Kanalreinigungsfahrzeug, vor, welche die im kennzeichnenden Abschnitt des Patentanspruchs 1 angeführten Merkmale aufweist. Weiterbildungen und/oder vorteilhafte Ausführungsvarianten der Erfindung sind Gegenstand der abhängigen Ansprüche.

Durch die Erfindung wird einer Wasseraufbereitungseinrichtung, insbesondere für ein Kanalreinigungsfahrzeug, geschaffen, die eine Trennvorrichtung für ein zugeführtes Luft-Schlamm Wasser Gemisch und einen damit verbundenen Wassertank für gereinigtes Wasser umfasst. Die Trennvorrichtung und der Wassertank bilden eine bauliche Einheit. Dabei ist die Trennvorrichtung für das Luft-Schlamm-Wasser Gemisch wenigstens bereichsweise von dem Wassertank für das gereingte Wasser umgeben.

Durch die erfindungsgemässe konstruktive Massnahme sind die Trennvorrichtung für das Wasser-Schlamm-Gemisch und der Wassertank für das gereinigte Wasser zu einer baulichen Einheit zusammengefasst und können gesamthaft transportiert, manipuliert und montiert werden. Indem der Wassertank die Trennvorrichtung für das Schlamm-Wasser-Gemisch wenigstens bereichsweise umgibt, ist die Wasseraufbereitungseinrichtung kompakt und platzsparend aufgebaut. Dies ermöglicht insbesondere bei der Montage auf einem Kanalreingigungsfahrzeug eine platzsparende Anordnung der Wasseraufbereitungseinrichtung und eine bessere Gewichtsverteilung des Fahrzeugs. Der gewonnene Platz kann beispielsweise für einen grösseren Schlammtank verwendet werden.

In einer besonders platzsparenden Konstruktion der Wasseraufbereitungseinrichtung sind die Trennvorrichtung und der Wassertank im wesentlichen konzentrisch angeordnet. Der Wassertank weist dabei beispielsweise eine im wesentlichen zylindrische Gestalt auf. Die Trennvorrichtung ist dann üblicherweise auch zylindrisch aufgebaut. Die Anordnung ist dann im wesentlichen koaxial.

Die Trennvorrichtung für das Schlamm-Wasser-Gemisch ist als ein Schlammabscheider mit einem Reservoir für den abgeschiedenen Schlamm ausgebildet. Die Trennvorrichtung macht sich die Schwerkraft zu Nutze. Dabei wird das Schlamm-Wasser-Gemisch an der in seiner Gebrauchslage tiefsten Stelle über ein Rohr in die Trennvorrichtung eingebracht und gegen eine beispielsweise siebartige Prallplatte geführt. Der Schlamm setzt sich auf dem Grund der Trennvorrichtung in dem Schlammresorvoir ab. Die gereinigte Luft strömt weiter und gelangt an eine Auslassöffnung. In Verbindung mit einer Wasserringpumpe wird der Luftstrom zur Wasserringpumpe geleitet.

Damit die Wasseraufbereitungseinrichtung möglichst kompakt ausgebildet werden kann, erweist es sich von Vorteil, die Trennvorrichtung möglichst schlank auszubilden. Wegen der für eine zuverlässige Trennung des Schlamm-Wasser-Gemisches erforderderlichen Fliessstrecke weist die Trennvorrichtung üblicherweise eine grössere Bauhöhe auf als der Wassertank. Damit die kompakte Bauweise erhalten bleibt, durchsetzt die in ihrer Gebrauchsstellung stehend angeordnete Trennvorrichtung den Wassertank in axialer Richtung.

Ein Abschnitt des Wassertanks der Wasseraufbereitungseinrichtung ist mit Vorteil als ein Wasserabscheider ausgebildet. Beispielsweise ist der Wasserabscheider als ein Zyklon ausgebildet. Die von der Wasserringpumpe verdichtete Luft ist üblicherweise mit Wassertropfen aus der Wasserringpumpe vermengt. Zur Rückgewinnung des Wassers wird die verdichtete Luft über eine Einströmöffnung im Wassertank in den Wasserabscheider geleitet. Diese ist mit Vorteil als ein Zyklon ausgebildet. Die mit Wassertropfen versetzte Luft wird üblicherweise etwa tangential in den Zyklon geleitet. Dort werden die mit der Luft mitgeführten Wassertropfen in den Wassertank abgeschieden. Die von Wassertropfen befreite Luft wird in Freie abgeblasen.

Zur Rezyklierung des Wassers ist der Wassertank mit wenigstens einem Auslass versehen, über den beispielsweise von einer Wasserringpumpe Wasser bezogen werden kann.

Die Wasseraufbereitungseinrichtung ist als eine bauliche Einheit ausgebildet. Damit sie einfach mit bestehenden Gerätekomponenten, beispielsweise eines Kanalreinigungsfahrzeugs kombinierbar ist, ist der die Trennvorrichtung umgebende Wassertank mit Zu- bzw. Abführanschlüssen für die angesaugte Luft ausgestattet. Dies ermöglicht es, die Wasseraufbereitungseinrichtung einfach an eine Vakuumeinrichtung, beispielsweise eine Wasserringpumpe, anzuschliessen. Dadurch sind die Voraussetzungen dafür geschaffen, die Wasseraufbereitungseinrichtung unabhängig von der Gestaltung des Schlammtanks auszubilden. Die erfindungsgemässe Wasseraufbereitungseinrichtung kann beispielsweise auch auf bereits bestehende Kanalreinigungsfahrzeuge an Stelle der mit separaten Trennvorrichtung und des separaten Wassertanks montiert werden, da alle erforderlichen Anschlüsse bereits integriert sind. Ein Hersteller von Kanalreinigungsfahrzeugen kann somit die Wasserreinigungseinrichtung unabhängig von den übrigen Fahrzeugkomponenten beschaffen, was seine wirtschaftliche Flexibilität erhöht.

Für den Betrieb der Wasseraufbereitungseinrichtung, insbesondere an einem Kanalreinigungsfahrzeug, erweist es sich von Vorteil, wenn sie bereits mit einer integrierten Umschalteinrichtung für die Luftströme aus bzw. in die Trennvorrichtung bzw. den Wassertank ausgestattet ist. Die Umschalteinrichtung, meist ein Vierwegschalter, ist auf die Erfordernisse der Wasseraufbereitungseinrichtung abgestimmt und muss nur noch an eine Energieversorgungsquelle, beispielsweise an das Bordnetz des Kanalreinigungsfahrzeugs angeschlossen werden.

Ein mit einer erfindungsgemäss ausgebildeten Wasseraufbereitungseinrichtung ausgestattetes Kanalreinigungsfahrzeug weist wegen der kompakten Abmessungen der Wasseraufbereitungseinrichtung mehr Platz auf. Dieser kann beispielsweise dazu genutzt werden, das Volumen des Schlammtanks zu vergrössern. Die kompakte Ausbildung der Wasseraufbereitungseinrichtung erlaubt eine Montage in in stehendem Zustand neben der erforderlichen Vakuumpumpe, beispielsweise einer Wasserringpumpe, zwischen der Fahrerkabine und einem liegend angeordneten Schlammtank. Die Vakuumpumpe, vielfach eine Wasserringpumpe, entnimmt das Wasser unmittelbar aus dem daneben angeordneten Wassertank. Der erzeugte Unterdruck wird zum Ansaugen und des Schlamm-Wasser-Gemisches und des gereingten Wassers aber auch zur Unterstützung der Trennung des Schlamm-Wasser-Gemisches im Zyklon verwendet. Die Saugstrecken können durch die vorteilhafte Anordnung der Wasserringpumpe und der Wasseraufbereitungseinrichtung gering gehalten werden. Dies hat Vorteile für die erzielbare Vakuumleistung. Der durch die platzsparende Anordnung gewonnene Raum kann dazu benutz werden, den Schlammtank weiter in Richtung der Fahrerkabine zu rücken. Dies verbessert die Gewichtsverteilung und die Lage des Schwerpunkts des Kanalreinigungsfahrzeugs. Es ist dadurch auch leichter und sicherer zu manövrieren.

Aus dem Stand der Technik sind Kanalreinigungsfahrzeuge bekannt, bei denen der Schlammtank zur Entleerung gekippt wird. Durch die völlige Trennung der Wasseraufbereitungseinrichtung von dem Schlammtank muss nur noch der Schlammtank gekippt werden. Die Wasseraufbereitungseinrichtung behält beim Kippen des angeordneten Schlammtanks ihre Lage auf dem Fahrzeug unverändert bei. Dadurch vereinfacht sich die Konstruktion. Indem zur Entleerung nur mehr der Schlammtank alleine gekippt werden muss, verringert sich die zu kippende Masse, was Vorteile bezüglich des Kraftstoffverbrauchs des Kanalreingigungsfahrzeugs bringt.

Weitere Vorteile und Merkmale der Erfindung ergeben sich aus der nachfolgenden Beschreibung eines Ausführungsbeispiels der Erfindung und seiner Anwendung in einem Kanalreinigungsfahrzeug. Es zeigen in nicht massstabsgetreuer schematischer Darstellung:
- Fig. 1: eine erfindungsgemässe Wasseraufbereitungseinrichtung im Zusammenwirken mit einer Vakuumeinrichtung, beispielsweise einer Wasserringpumpe, und einem Schlammtank; und
- Fig. 2: die Anordung einer erfindungsgemässen Wasseraufbereitungseinrichtung auf einem Kanalreinigungsfahrzeug.

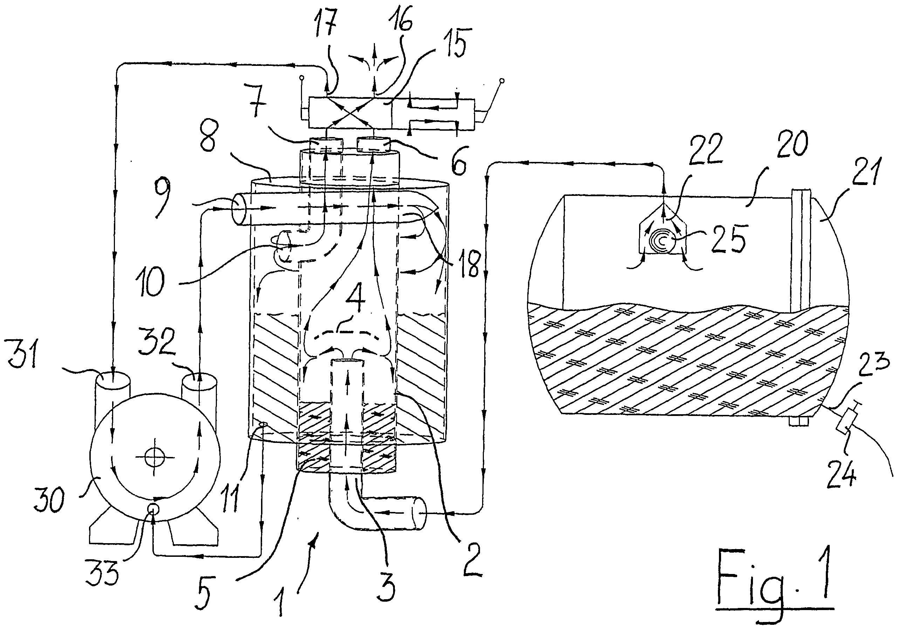

In Fig.1 ist eine erfindungsgemässe Wasseraufbereitungseinrichtung, die gesamthaft das Bezugszeichen 1 trägt, im Zusammenwirken mit einem Schlammtank 20 und mit einer Vakuumpumpe 30, insbesondere mit einer Wasserringpumpe, dargestellt. Beim Absaugen von Kanälen sammeln sich Steine, Kies und Schlamm im Schlammtank 20. Die über eine mit einem Ventil 25 versehene Absaugöffnung 22 des Schlammtanks 20 angesaugte Luft führt immer auch ein Schlamm-Wasser-Gemisch mit sich, welches in der Wasseraufbereitungseinrichtung 1 abgetrennt werden muss, bevor die Luft wieder der Vakuumpumpe 30 zugeführt wird.

Die Wasseraufbereitungseinrichtung 1 umfasst eine Trennvorrichtung 2 für ein angesaugten Schlamm-Wasser-Gemisch, die im wesentlichen konzentrisch bzw. koaxial zu einem Wassertank 8 für das gereinigte Wasser angeordnet ist. Die Trennvorrichtung 2 und der Wassertank 8 weisen eine im wesentlichen zylindrische Gestalt auf und sind in der Gebrauchsstellung der Wasseraufbereitungseinrichtung 1 stehend angeordnet.

Die Trennvorrichtung 2 weist an ihrer tiefsten Stelle einen Einlass 3 für das mit der angesaugten Luft mitgeführte Schlamm-Wasser-Gemisch auf. Der zylindrische Einlassstutzen 3 endet vor einer Prallplatte 4. Das mitgeführte Schlamm-Wasser-Gemisch spritzt gegen die Prallplatte und setzt sich in einem Schlammreservoir 5 am Boden der Trennvorrichtung 2 ab. Die Luft strömt über die Auslassöffnung 6 der Trennvorrichtung und einen Auslass 17 weiter in Richtung der als Wasserringpumpe ausgebildeten Vakuumpumpe 30. In der Wasserringpumpe 30 nimmt die Luft meist Wassertropfen auf. Die mit Wassertropfen vermengte, nunmehr verdichtete Luft gelangt über eine Einströmöffnung 9 im Wassertank 8 üblicherweise etwa tangential in einen mit Vorteil als Zyklon 18 ausgebildeten Abschnitt des Wassertanks 8. Dort werden die mit der Luft mitgeführten Wassertropfen in den Wassertank 8 abgeschieden. Die von Wassertropfen befreite Luft gelangt über eine Ausströmöffnung 10 des Wassertanks 8, die mit einer Ausströmöffnung 7 der Trennvorrichtung 2 verbunden ist, und einen Auslass 16 ins Freie.

Die Auslässe 16 ins Freie bzw. 17 in Richtung der Wasserringpumpe sind an einer mit dem Bezugszeichen 15 versehenen Umschaltvorrichtung vorgesehen. Die Umschaltvorrichtung 15 ist als ein Vierwegventil ausgebildet und sorgt für die Steuerung der Luftströme aus der Trennvorrichtung 2 und aus dem Wassertank 8. Mit Vorteil ist die Umschaltvorrichtung mit der Wasseraufbereitungseinrichtung 1 zu einer gemeinsam handhabbaren baulichen Einheit verbunden. Dabei fallen die Einlässe der Umschaltvorrichtung 15 mit den Ausströmöffnungen 6, 7 der Trennvorrichtung 2 zusammen. Die Umschaltvorrichtung 15 sorgt für die Leitung der Luftströme über die Auslässe 6 und 7 der Trennvorrichtung 2.

Die rechte Hälfte der symbolisch dargestellten Umschaltvorrichtung 15 gibt einen zweiten Schaltzustand und die zugehörigen Strömungsrichtungen durch entsprechende Pfeile an. In diesem Fall, der beispielsweise zur Entleerung der Wasseraufbereitungseinrichtung 1 bzw. auch des Schlammtanks 20 erforderlich ist, sind die Luftströmungen umgekehrt. Die Wasserringpumpe 30 saugt über die Auslässe 16,17 Luft aus der Umgebung an. Die verdichtete Luft, die gegebenenfalls noch Wassertropfen aus der Wasserringpumpe 30 mitführt, wird über die Öffnungen 9, 10, 7 und 6 in den Wassertank 8 bzw. die Trennvorrichtung 2 geleitet. Von dort gelangt sie über den Einlass 3 der Trennvorrichtung 2 und die Absaugöffnung 22, 25 auch in den Schlammtank 20.

Die Wasseraufbereitungseinrichtung 1 ist über die Umschaltvorrichtung mit einem Einlass 31 der Wasserringpumpe 30 verbunden. Wasserringpumpen sind aus dem Stand der Technik hinlänglich bekannt und bestehen jeweils aus einem zylindrischen Gehäuse, in dem sich ein Laufrad mit radialen, geraden oder gekrümmten Schaufeln befindet. Die Welle des Laufrades ist exzentrisch zu dem umgebenden Gehäuse gelagert. Das Gehäuse ist über eine Leitung teilweise mit Wasser gefüllt. Im dargestellten Ausführungsbeispiel ist die Wasserringpumpe über eine einen Auslass 11 im Wassertank 8 mit einem Einlass 33 im Gehäuse der Wasserringpumpe 30 verbindende Leitung mit Wasser versorgt. Bei der Rotation des Laufrades bildet sich im Gehäuse ein Wasserring aus, in den die Schaufeln wegen der exzentrischen Lagerung der Welle mehr oder weniger tief eintauchen. Die dabei von den Schaufeln des Laufrades im Wasserring abgeteilten einzelnen Zellen vergrössern bzw. verkleinern sich bei der Rotation periodisch. Saug- und Drucköffnungen sind derart in den seitlichen Deckeln des Gehäuses angebracht, dass die Saugöffnungen im Bereich der sich vergrössernden Zellen, die Drucköffnungen im Bereich der sich verkleinernden Zellen angeordnet sind. Die durch die Einlassöffnung 31 angesaugte Luft wird durch die Vergrösserung der Zellenvolumina angesaugt, bei der Verkleinerung der Zellenvolumina verdichtet und durch die Drucköffnung 32 aus der Wasserringpumpe herausgepresst. Allenfalls mit der komprimierten Luft mitgeführtes Wasser gelangt über den Einlass 9 im Wassertank in den Bereich des Zyklons 18, wird dort von der Luft abgeschieden und setzt sich im Wassertank 8 ab. Dort steht es wieder für die Versorgung der Wasserringpumpe 30 mit Wasser bereit. Die Luft wird über die Umschaltvorrichtung 15 in die Umgebung abgelassen.

Der üblicherweise liegend angeordnete Schlammtank 20 weist einen aufschwenkbaren Deckel 21 auf, durch den der im Tank abgelagerte Schmutz, Steine, Kies und Schlamm entleert werden können. Im Deckelbereich ist auch noch eine Entleerleitung 23 mit einem Absperrhahn 24 vorgesehen, über welche vor der Entleerung des Schlammtanks flüssige Bestandteile abgelassen werden können.

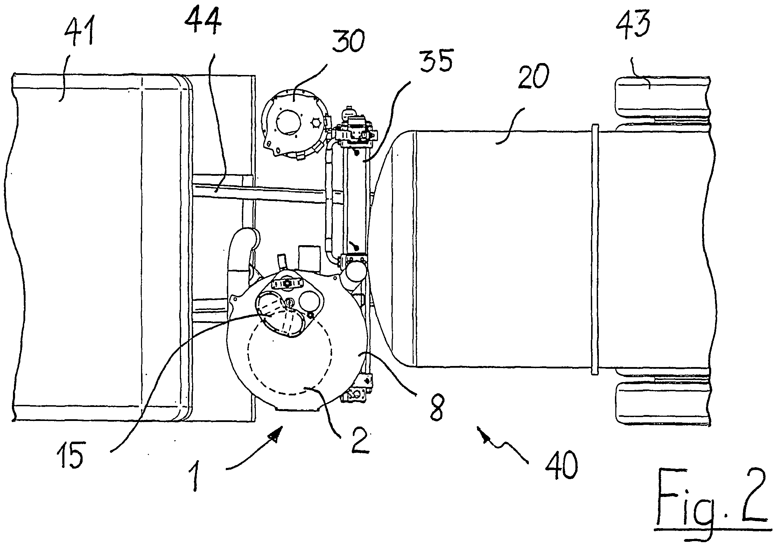

Fig 2 zeigt eine Anordnung einer erfindungsgemässen Wasseraufbereitungseinrichtung 1 auf einem Kanalreinigungsfahrzeug, das gesamthaft mit dem Bezugszeichen 40 versehen ist. Die Wasseraufbereitungseinrichtung 1 mit der vom Wassertank 8 umschlossenen Trennvorrichtung 2 ist im Anschluss an die über der Vorderachse befindliche Fahrerkabine 41, neben der Vakuumpumpe 30 auf dem Rahmen 44 des Fahrzeugs 40 angeordnet. Mit dem Bezugszeichen 35 ist eine Hochdruckpumpe bezeichnet, welche zur Erzeugung des Hochdrucks für den Wasserstrahl zur Kanalreinigung dient. Diese wird beispielsweise von dem Wassertank 8 für das gereinigte Wasser versorgt. Daher erweist es sich von Vorteil, wenn die Hochdruckpumpe ebenfalls in der Nähe der Wasseraufbereitungseinrichtung 1 angeordnet ist. In Fig. 2 ist sie auf dem Fahrzeugrahmen 44 montiert. In einer alternativen Ausführungsvariante kann sie aus Platzgründen aber auch unterhalb des Rahmens angeordnet sein. In diesem Fall kann sie auch noch weiter in Richtung der Fahrerkabine 41 gerückt werden. Mit dem Bezugszeichen 20 ist der Schlammtank bezeichnet, der wegen der platzsparenden Ausbildung und Anordung der Wasseraufbereitungseinrichtung 1 weiter in Richtung der Fahrerkabine 41 gerückt ist. Dadurch ist die Hauptlast des Schlammtanks 20 vor oder über die mit dem Bezugszeichen 43 angedeuteten Hinterachsen des Kanalreirugungsfahrzeugs 40 gerückt. Die verbesserte Gewichtsverteilung hat Vorteile hinsichtlich der Manövrierfähigkeit des Fahrzeugs und führt auch zu einem gleichmässigeren Reifen-verschleiss.Durch die kompakte Ausbildung der Wasseraufbereitungseinrichtung 1 kann der Schlammtank 20 mit einem grösseren Volumen ausgebildet werden. Dadurch werden die Intervalle, in denen der Schlammtank entleert werden muss, vergrössert und die effektive Einsatzdauer des Kanalreinigungsfahrzeugs verlängert.

## Patentansprüche

1. Wasseraufbereitungseinrichtung für ein Kanalreinigungsfahrzeug, umfassend eine Trennvorrichtung (2) mit einem Einlass (3) für ein mit angesaugter Luft zugeführtes Schlamm-Wasser Gemisch und einem Auslass (6) für die Verbindung mit einer Vakuumpumpe, und einen damit verbundenen Wassertank (8) für gereinigtes Wasser, wobei die Trennvorrichtung (2) für das Luft-Schlamm-Wasser Gemisch wenigstens bereichsweise von dem Wassertank (8) für das gereinigte Wasser umgeben ist, **dadurch gekennzeichnet, dass** die Trennvorrichtung (2) und der Wassertank (8) eine bauliche Einheit bilden, wobei die Trennvorrichtung den Wassertank (8) axial durchsetzt.

2. Wasseraufbereitungseinrichtung nach Anspruch 1, **dadurch gekennzeichnet, dass** die Trennvorrichtung (2) und der Wassertank (8) im Wesentlichen konzentrisch angeordnet sind.

3. Wasseraufbereitungseinrichtung nach Anspruch 1 oder 2, **dadurch gekennzeichnet, dass** die Trennvorrichtung (2) einen Schlammabscheider mit einem Reservoir (5) für abgesetzten Schlamm umfasst.

4. Wasseraufbereitungseinrichtung nach Anspruch 1, **dadurch gekennzeichnet, dass** die Trenneinrichtung (2) an ihrer in Gebrauchslage tiefsten Stelle einen Einlass (3) für ein zu trennendes Luft-Schlamm-Wasser Gemisch aufweist und an ihrem gegenüberliegenden Ende ein Auslass (7) für gereinigte Luft vorgesehen ist.

5. Wasseraufbereitungseinrichtung nach einem der vorangehenden Ansprüche, **dadurch gekennzeichnet, dass** ein Abschnitt (18) des Wassertanks (8) als ein Wasserabscheider für mit der Luft mitgeführtes Wasser ausgebildet ist.

6. Wasseraufbereitungseinrichtung nach Anspruch 5, **dadurch gekennzeichnet, dass** der Wasserabscheider ein Zyklon ist.

7. Wasseraufbereitungseinrichtung nach einem der vorangehenden Ansprüche, **dadurch gekennzeichnet, dass** der Wassertank (8) wenigstens einen Auslass (11) aufweist, über den beispeilsweise eine Vakuumvorrichtung, insbesondere eine Wasserringpumpe (30), mit Wasser versorgbar ist.

8. Wasseraufbereitungseinrichtung nach einem der vorangehenden Ansprüche, **dadurch gekennzeichnet, dass** sie mit einer integrierten Umschalteinrichtung (15) für die Luftströme aus bzw. in die Trennvorrichtung (2) bzw. den Wassertank (8) ausgestattet ist.

9. Wasseraufbereitungseinrichtung nach Anspruch 8, **dadurch gekennzeichnet, dass** die Umschalteinrichtung (15) ein Vierwegventil ist.

10. Kanalreinigungsfahrzeug mit einer Wasseraufbereitungseinrichtung (1) gemäss einem der vorangehenden Ansprüche.

11. Kanalreinigungsfahrzeug nach Anspruch 10, **dadurch gekennzeichnet, dass** die Wasseraufbereitungseinrichtung (1) in stehendem Zustand neben einer Vakuumpumpe, beispielsweise einer Wasserringpumpe (30), zwischen einer Fahrerkabine (41) und einem liegend angeordneten Schlammtank (20) angeordnet ist.

12. Kanalreinigungsfahrzeug nach Anspruch 11, **dadurch gekennzeichnet, dass** die Wasseraufbereitungseinrichtung (1) beim Kippen eines kippbar angeordneten Schlammtanks (20) ihre Lage auf dem Fahrzeug (40) unverändert beibehält.

## Claims

1. Water treatment means for a sewer cleaning vehicle, comprising a separation device (2) with an inlet (3) for a mud-water mixture which has been supplied with intaken air and an outlet (6) for the connection with a vacuum pump and a water tank (8) which is connected to it for cleaned water, whereby the separation device (2) for the mud-water mixture is surrounded at least in areas by the water tank (8) for the cleaned water **characterized in that** the separation device (2) and the water tank (8) form a structural unit whereby the separation device axially penetrates the water tank (8).

2. Water treatment means as claimed in claim 1, wherein the separation device (2) and the water tank (8) are arranged essentially concentrically.

3. Water treatment means as claimed in claim 1 or 2, wherein the separation device (2) comprises a mud separator with a reservoir (5) for the settled mud.

4. Water treatment means as claimed in claim 1, wherein the separation device (2) at its point which is the lowest in the position of use has one inlet (3) for an air-mud-water mixture which is to be separated and on its opposite end there is an outlet (7) for cleaned air.

5. Water treatment means as claimed in one of the preceding claims, wherein one section (18) of the water tank (8) is made as a water separator for water which is entrained with the air.

6. Water treatment means as claimed in claim 5, wherein the water separator (18) is a cyclone.

7. Water treatment means as claimed in one of the preceding claims, wherein the water tank (8) is provided with at least one outlet (11) by way of which for example a vacuum device, especially a water ring pump (30), can be supplied with water.

8. Water treatment means as claimed in one of the preceding claims, wherein it is equipped with an integrated switching means (15) for the air flows into and out of the separation device (2) or the water tank (8).

9. Water treatment means as claimed in claim 8, wherein the switching means (15) is a four-way valve.

10. Sewer cleaning vehicle with a water treatment means (1) as claimed in one of the preceding claims.

11. Sewer cleaning vehicle as claimed in claim 10, wherein the water treatment means (1) is located in the vertical state next to a vacuum pump, for example a water ring pump (30), between a cab (41) and a horizontally arranged mud tank (20).

12. Sewer cleaning vehicle as claimed in claim 11, wherein the water treatment means (1) maintains its position unchanged on the vehicle (40) when the sludge tank (2) with a tipping capacity is tipped.

## Revendications

1. Dispositif de traitement de l'eau pour un véhicule de nettoyage de canalisations comprenant un dispositif de séparation (2), avec une entrée (3) pour un mélange d'eau et de boue amené avec de l'air aspiré et avec une sortie (6) pour la liaison avec une pompe à vide, et un réservoir d'eau (8) qui lui est relié pour l'eau purifiée, le dispositif de séparation (2) pour le mélange d'eau, de boue et d'air étant entouré au moins par zone par le réservoir d'eau (8) pour l'eau purifiée, **caractérisé en ce que** le dispositif de séparation (2) et le réservoir d'eau (8) forment une unité sur le plan de la construction, le dispositif de séparation traversant le réservoir d'eau (8) dans le sens axial.

2. Dispositif de traitement de l'eau selon la revendication 1, **caractérisé en ce que** le dispositif de séparation (2) et le réservoir d'eau (8) sont placés de manière substantiellement concentrique.

3. Dispositif de traitement de l'eau selon la revendication 1 ou 2, **caractérisé en ce que** le dispositif de séparation (2) comprend un décanteur de boues avec un réservoir (5) pour la boue qui a été décantée.

4. Dispositif de traitement de l'eau selon la revendication 1, **caractérisé en ce que** le dispositif de séparation (2) présente, à son endroit le plus bas en position d'utilisation, une entrée (3) pour un mélange d'eau, de boue et d'air à séparer et qu'une sortie (7) pour l'air purifié est prévue à son extrémité opposée.

5. Dispositif de traitement de l'eau selon l'une des revendications précédentes, **caractérisé en ce qu'**une section (18) du réservoir d'eau (8) est configurée comme un séparateur d'eau pour l'eau entraînée avec l'air.

6. Dispositif de traitement de l'eau selon la revendication 5, **caractérisé en ce que** le séparateur d'eau est un cyclone.

7. Dispositif de traitement de l'eau selon l'une des revendications précédentes, **caractérisé en ce que** le réservoir d'eau (8) présente au moins une sortie (11) par laquelle par exemple un dispositif sous vide, en particulier une pompe à anneau d'eau (30), peut être alimenté en eau.

8. Dispositif de traitement de l'eau selon l'une des revendications précédentes, **caractérisé en ce qu'**il est équipé d'un dispositif d'inversion intégré (15) pour les courants d'air provenant de ou entrant dans le dispositif de séparation (2) ou dans le réservoir d'eau (8).

9. Dispositif de traitement de l'eau selon la revendication 8, **caractérisé en ce que** le dispositif d'inversion (15) est une vanne à quatre voies.

10. Véhicule de nettoyage de canalisations avec un dispositif de traitement de l'eau (1) selon l'une des revendications précédentes.

11. Véhicule de nettoyage de canalisations selon la revendication 10, **caractérisé en ce que** le dispositif de traitement de l'eau (1) est placé, à l'état debout, près d'une pompe à vide, par exemple d'une pompe à anneau d'eau (30), entre une cabine de conducteur (41) et un réservoir de boue (20) placé couché.

12. Véhicule de nettoyage de canalisations selon la revendication 11, **caractérisé en ce que**, lors du basculement d'un réservoir de boue (20) placé basculant, le dispositif de traitement de l'eau (1) conserve sa position sur le véhicule (40) de manière inchangée.
